# EUROPEAN PATENT SPECIFICATION

(11) **EP 3 471 108 B1**
(45) Date of publication and mention of the grant of the patent: **20.01.2021**
(21) Application number: 17813000.1
(22) Date of filing: 11.04.2017
(51) Int. Cl.: G21D 3/00, G05B 19/042, G05B 23/02

(54) **HUMAN-MACHINE INTERFACE DEVICE**
MENSCH-MASCHINE-SCHNITTSTELLENVORRICHTUNG
DISPOSITIF D'INTERFACE HOMME-MACHINE

(30) Priority: 13.06.2016 JP 2016117163
(43) Date of publication of application: 17.04.2019
(73) Proprietor: Hitachi, Ltd., Tokyo 100-8280 (JP)
(72) Inventor: KOYAMADA, Taisuke, Tokyo 100-8280 (JP); AKASAKA, Satoru, Tokyo 100-8280 (JP); SHIRAISHI, Masahiro, Tokyo 100-8280 (JP)
(74) Representative: MERH-IP Matias Erny Reichl Hoffmann Patentanwälte PartG mbB
(86) International application number: PCT/JP2017/014852
(87) International publication number: WO 2017/217094

(56) References cited:
- JP-A- H0 186 698
- JP-A- H1 039 923
- JP-A- H11 327 633
- JP-A- H11 345 005
- JP-A- 2001 141 869
- JP-A- 2001 141 869
- US-A1- 2012 128 113

## Description

### Technical Field

The present invention relates to a human-machine interface device which is applied to a safety system of a nuclear power plant.

### Background Art

In recent years, an instrumentation and control system of a plant is being digitalized. A software-based monitoring/operation console using a workstation and a display with operation functions is mainly used for an operation console of an operator. Many operation switches and analog indicators/meters disposed in the operation console in the related art are also digitally displayed on the display. With this configuration, information is collected from a suitable ergonomic design and a suitable system design based on a failure evaluation of a digital device, and a load on the operator is alleviated.

Many commercial products are included in the human-machine interface device of the related art such as the workstation and the display with operation functions as described above. It is important that these commercial products should timely meet various needs of general consumers to survive a fierce market competition. The commercial products have common features as follows.

As a first feature, development is focused on speed, and a failure is handled by upgrading. In the upgrading, updating and revising of software through a Web are performed in many cases. As a second feature, multi-functionalization and complication of functions are progressed using embedded software. For example, there is a touch operation of the display using software. As a third feature, a technical know-how is formed in a black box through a precise management of intellectual property.

However, on the other hand, regulations on the safety of facilities such as nuclear power plants, which have a great impact on the public as a result of plant accidents, have become stricter than ever. In order to cope with this situation, a device applied to a safety system of the nuclear power plant needs to have a feature different from that of the commercial products. For example, in an invention of a safety system operation device of the nuclear power plant disclosed in PTL 1, when an individual safety system plant device is selected from a system diagram displayed on a safety system display with a display for displaying a system diagram and a display for displaying an operating unit as separate displays, the corresponding operating unit is displayed in another place from the already-displayed system diagram, and the system diagram is kept displaying.
PTL 2 shows a plant operation device that carries out plant operation, and its system. Plant equipment provided for each system of a plant, is controlled by a plant equipment-control device. Information regarding the entire plant is inputted into a plant computer, and the plant equipment-control device and the plant computer are connected to a processor. A display is connected to the processor. The processor is connected to a screen selection device for selecting a screen, so that the display displays the information of the system that can be operated, and an input device for operating the plant equipment of each system. Also, the processor is connected to a mode-switching device for switching the operation mode for permitting operation by the input device to a monitor mode for disabling operation.

The IEC standard (IEC 61513) is related to an instrumentation and control device which serves an important role in the safety of the nuclear power plant. In this IEC standard, the importance (Classes 1 to 3) of the nuclear power plant from the viewpoint of safety is determined according to the functions of the instrumentation and control system of the nuclear power plant. In particular, the most precise development/design process and traceability assurance are required for a digital instrumentation and control device corresponding to class 1 (safety system), which is classified as the highest level of importance. Depending on the regulatory decisions of each country, human-machine interface device applied to the safety system of a nuclear power plant based on the technology of commercial products may also require precise standards compliance. A precise standard compliance includes, for example, the design corresponding to SIL requirements of a functional safety standard (IEC 61508), the disclosure of the software development/design process, and the precise assessment by a third party.

### Citation List

### Patent Literature

PTL 1: JP 5185864 B2
PTL 2: JP 2001 141869 A

### Summary of Invention

### Technical Problem

Thus, the main requirements for the human-machine interface device applied to the safety system of the nuclear power plant are three points: precise development/design process management, simplicity of functions, and explanation to third parties. The precise development/design process management refers to verification and validation, traceability assurance, design change management. The simplicity of functions refers to the elimination as much as possible of the failure factors resulting from design complexity including common cause failures. The explanation to third parties refers to making all design information for the used devices white-boxes. The design information includes development processes, source codes of internal programs, and test reports.

The three requirements listed herein are completely contrary to the features of the commercial products. However, in order to satisfy the requirements, returning to a conventional operation console where many operation switches and analog indicators/meters are disposed leads to an increase in space, and consequently to an increase in the monitoring/operation load of the operator.

Herein, an object of the invention is to provide a human-machine interface device which satisfies each requirement for the safety system of the nuclear power plant and suppresses a monitoring/operation load of the operator.

### Solution to Problem

The above problem is solved by the subject matter of the appended claims. In particular, a human-machine interface device of the invention includes a logic controller which is applied to a safety system of a nuclear power plant, and a display device which includes a hard switch. The logic controller includes an interface to an instrumentation and control system of the nuclear power plant, a logic unit configured by a hardware logic to control switching of display information of the display device by the hard switch, and a display controller converting the display information from this logic unit into pixels to output the display information to the display device. The other aspects are described in the embodiment of the invention.

### Advantageous Effects of Invention

According to the invention, it is possible to provide a human-machine interface device which satisfies requirements for a safety system of a nuclear power plant and suppresses a monitoring/operation load of an operator.

### Brief Description of Drawings

[FIG. 1] FIG. 1 is a diagram illustrating a configuration of a human-machine interface device.
[FIG. 2] FIG. 2 is a diagram illustrating a display device of a first embodiment and a monitor screen displayed therein.
[FIG. 3] FIG. 3 is a diagram illustrating the display device of the first embodiment and an operation screen before selecting a device displayed therein.
[FIG. 4] FIG. 4 is a diagram illustrating the display device of the first embodiment and an operation screen after selecting a device displayed therein.
[FIG. 5] FIG. 5 is a diagram illustrating the display device of the first embodiment and an operation screen after determining a device displayed therein.
[FIG. 6] FIG. 6 is a diagram illustrating the display device of the first embodiment and an operation screen after selecting an operation direction displayed therein.
[FIG. 7] FIG. 7 is a diagram illustrating the display device of the first embodiment and an operation screen after determining an operation direction displayed therein.
[FIG. 8] FIG. 8 is a flowchart illustrating an operation method of the human-machine interface device.
[FIG. 9] FIG. 9 is a diagram illustrating a mode transition of the human-machine interface device.
[FIG. 10] FIG. 10 is a diagram illustrating the display device of a second embodiment and an operation screen before selecting a device displayed therein.
[FIG. 11] FIG. 11 is a diagram illustrating the display device of the second embodiment and an operation screen after selecting a device displayed therein.
[FIG. 12] FIG. 12 is a diagram illustrating the display device of the second embodiment and an operation screen after determining a device displayed therein.
[FIG. 13] FIG. 13 is a diagram illustrating the display device of the second embodiment and an operation screen after selecting an operation direction displayed therein.
[FIG. 14] FIG. 14 is a diagram illustrating the display device of the second embodiment and an operation screen after determining an operation direction displayed therein.
[FIG. 15] FIG. 15 is a flowchart illustrating an operation method of a human-machine interface system.
[FIG. 16] FIG. 16 is a diagram illustrating a mode transition of the human-machine interface system.

### Description of Embodiments

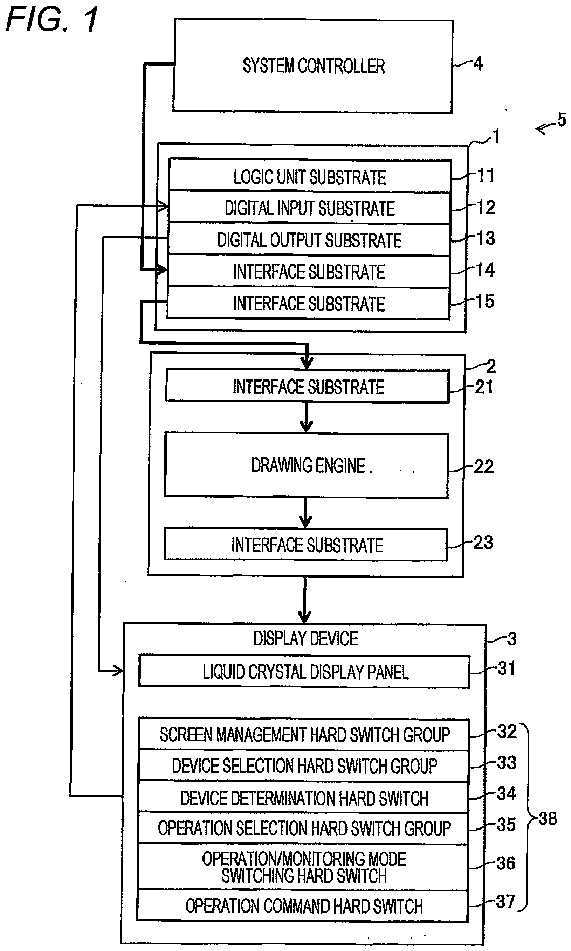

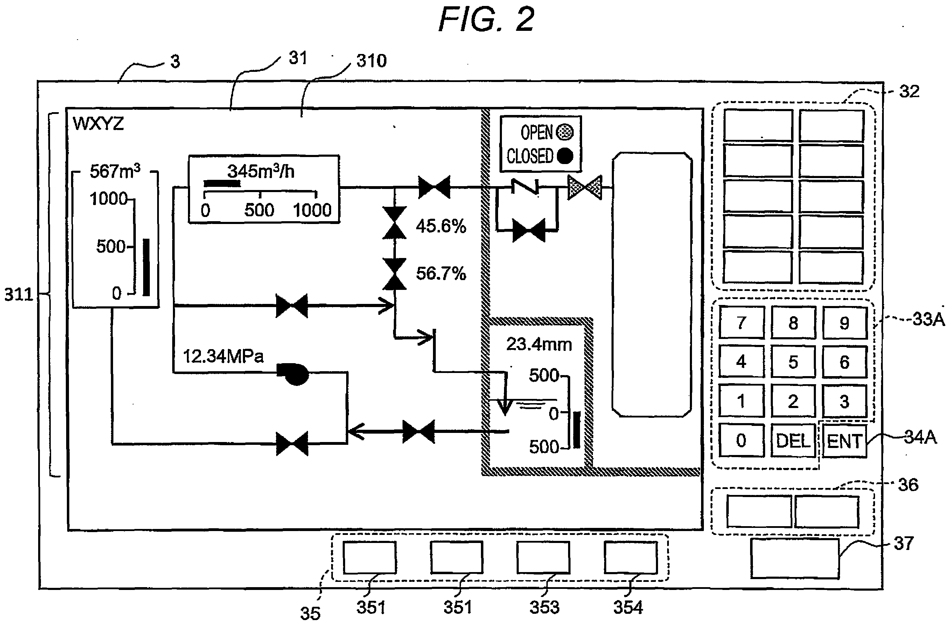

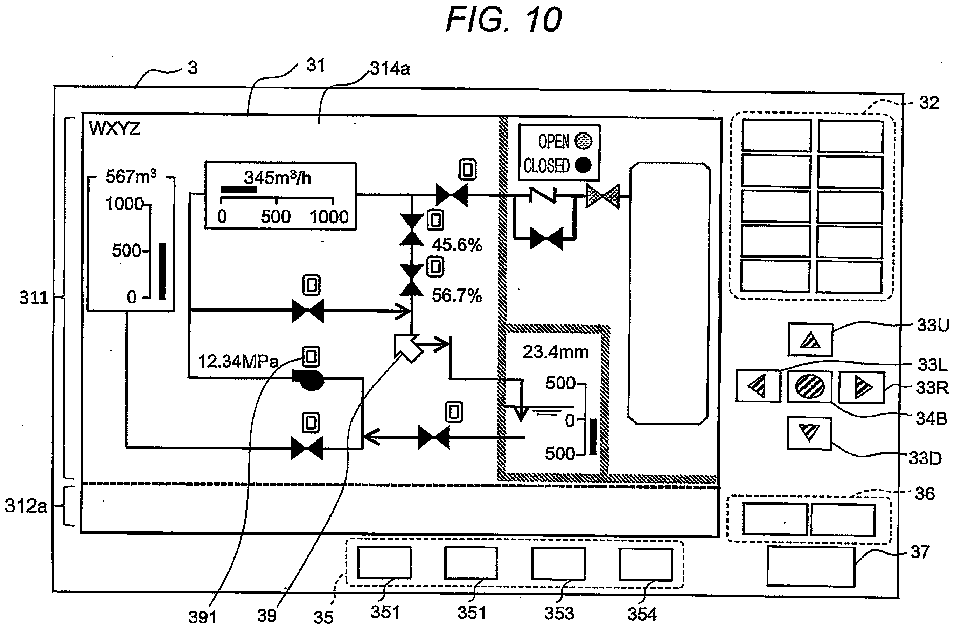

Hereinafter, embodiments of the invention are described in detail with reference to the drawings. First, the outline of a human-machine interface device applied to a safety system of a nuclear power plant is described using FIG. 1. Next, a first embodiment using a numeric keypad is described using FIGS. 2 to 9. Further, a second embodiment using a cursor key is described using FIGS. 10 to 16.

FIG. 1 is a diagram illustrating a configuration of a human-machine interface device 5. A logic controller 1 makes an interface to a system controller 4 of a host instrumentation and control system, and controls switching of display information of a display device 3 by a hard switch 38. A display controller 2 converts the display information from the logic controller 1 to pixels, and outputs the converted pixels to be displayed in a liquid crystal display of the display device 3.

The system controller 4 is a host controller related to instrumentation and control. The logic controller 1 is configured to include a logic unit substrate 11, a digital input substrate 12, a digital output substrate 13, and interface substrates 14 and 15. In the logic controller 1, a CPU (Central Processing Unit) and embedded software are not used, so that there is no need of precise verification required for the software of the safety system. The logic unit substrate 11 is manufactured by, for example, an FPGA (field-programmable gate array), and performs control and arithmetic operation by hardware. The digital input substrate 12 receives a signal from the hard switch 38 of the display device 3. The hard switch 38 is configured as an illumination-type button switch, and includes a lamp (not illustrated). The digital output substrate 13 outputs a signal to the lamp of the hard switch 38. The interface substrate 14 communicates with the system controller 4 included in the host instrumentation and control system. The interface substrate 15 communicates with the display controller 2.

The display controller 2 is configured to include interface substrates 21 and 23 and a drawing engine 22. The interface substrate 21 communicates with the logic controller 1, and receives the display information. The drawing engine 22 converts the display information received from the logic controller 1 into pixel information. The interface substrate 23 communicates with the display device 3, and outputs the converted pixel information to be displayed.

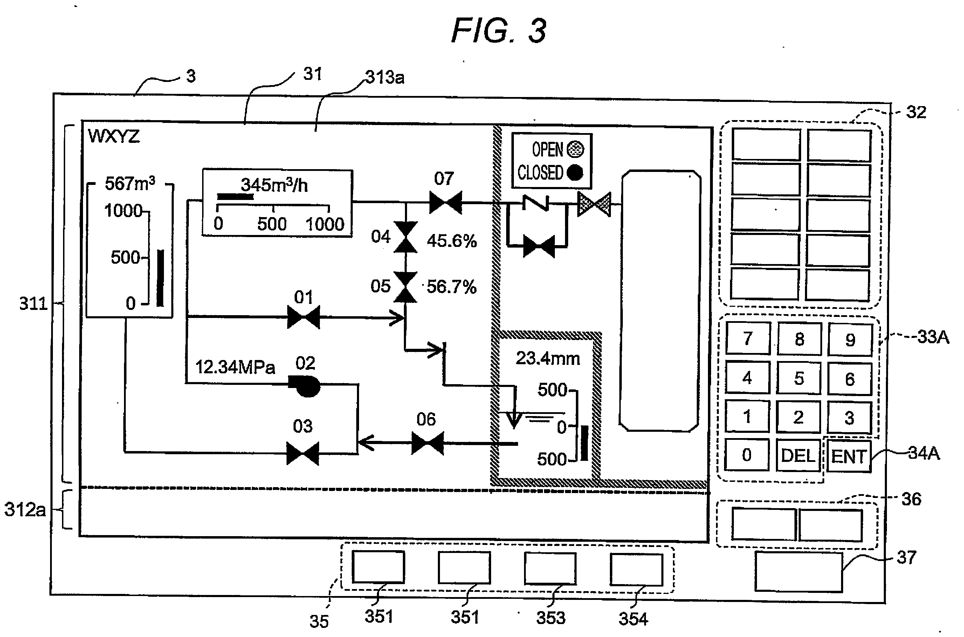

The human-machine interface device 5 of this embodiment is connected to the host system controller 4 which monitors and controls nuclear power plant. The human-machine interface device 5 displays an operation screen 313a (see FIG. 3) of an arbitrary process in response to a request of an operator to enable the operations of devices of the instrumentation and control system.

The main functions of the logic controller 1 are exemplified as the following three points. A first function is to display plant information sent from the host system controller 4 in the display device 3 through the display controller 2. A second function is to input a signal from the hard switch 38 of the display device 3 through the digital input substrate 12, and to control switching of the display information of the display. A third function is to output the signal of the hard switch 38 of the display device 3 to the host system controller 4, and to light the lamp of the hard switch 38 of the display device 3 according to the signal of the host system controller 4. At the time of operating the device, the logic controller 1 inputs a device selection signal and a mode selection signal from the hard switch 38 of the display device 3 through the digital input substrate 12, and then outputs the signals to the host system controller 4. Then, the logic controller 1 outputs returning signals of a device state and a mode selection state from the host system controller 4 through the digital output substrate 13, and lights the lamp of the hard switch 38 of the display device 3. At this time, the device state and the mode selection state can be recognized even on the display of the display device 3 through the display controller 2.

The display controller 2 inputs the display information from the logic controller 1 through the interface substrate 21 to convert the display information into the pixel information by the drawing engine 22. The display controller 2 outputs the converted pixel information to the display device 3 through the interface substrate 23 to be displayed. Herein, the logic controller 1 and the display controller 2 are assumed to be manufactured according to a precise development/design process in conformity to IEC standard (IEC 61513).

### <<First Embodiment>>

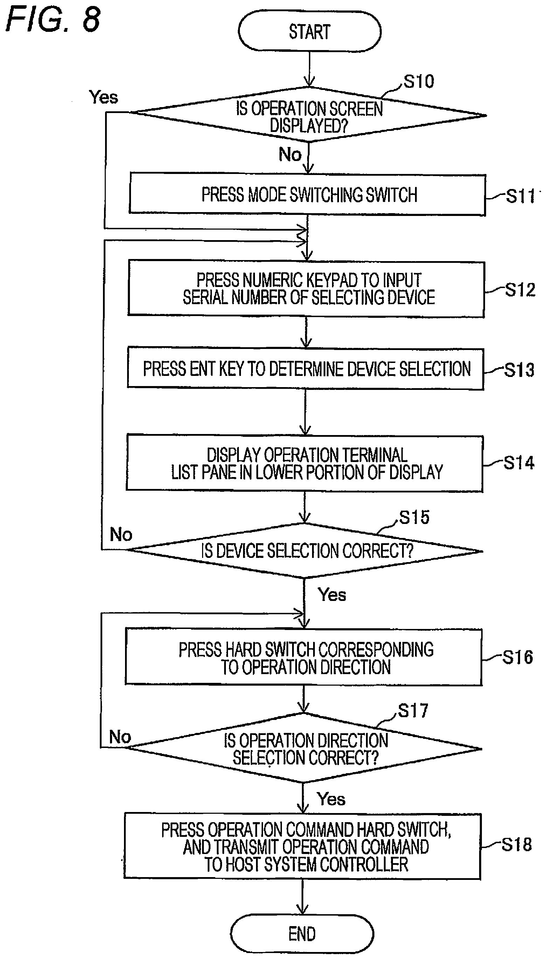

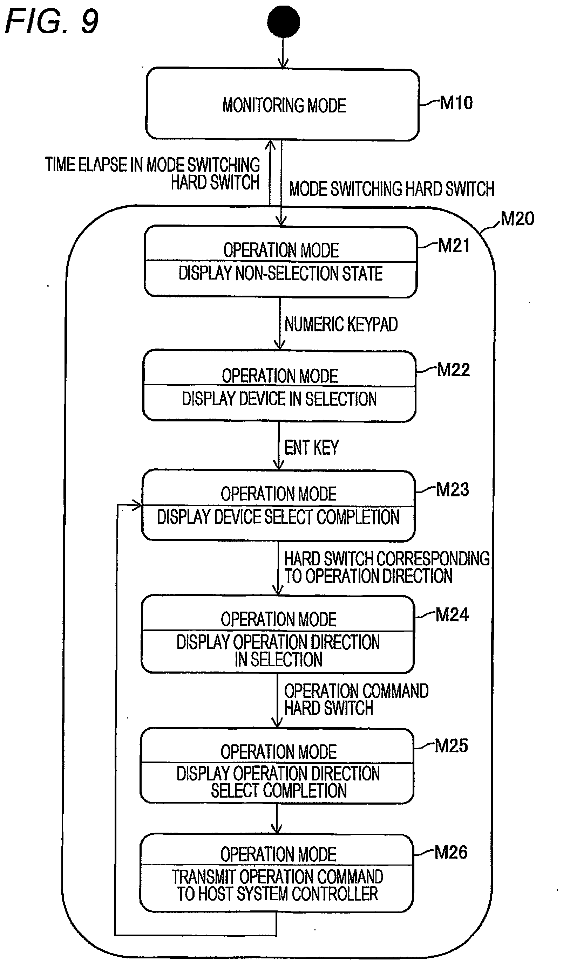

The configuration and the operation of the display device 3 used in the human-machine interface device 5 of the first embodiment are illustrated in FIGS. 2 to 7 below. Further, the operation of the human-machine interface device 5 is illustrated in FIGS. 8 and 9 below.

FIG. 2 is a diagram illustrating the display device 3 of the first embodiment and a monitor screen 310 displayed therein. The display device 3 includes a liquid crystal display panel 31 and the hard switch 38. The liquid crystal display panel 31 is a discrete component dedicated for displaying without using processor for display adjustment or using the embedded software. The hard switch 38 includes a screen management hard switch group 32, a numeric keypad 33A, an enter key 34A, an operation selection hard switch group 35, an operation/monitoring mode switching hard switch 36, and an operation command hard switch 37. Each hard switch 38 is a discrete component which includes a lamp such as an LED (light emitting diode), and the lamp emits light to show whether the hard switch is pressed.

The screen management hard switch group 32 is a switch to indicate a page forward/backward. The operation/monitoring mode switching hard switch 36 is a switch for switching a monitoring mode and an operation mode. The numeric keypad 33A is an aspect of a device selection hard switch group 33 (see FIG. 1) to select target device of an operation. The numeric keypad 33A is configured by total 11 hard switches including number keys from '0' to '9' and a delete key inscribed with "DEL", and is used to input numbers corresponding to a serial number of a target device at the time of selecting a device. The enter key 34A inscribed with "ENT" is an aspect of a device determination hard switch 34 (see FIG. 1), and a switch to determine target device of an operation.

The operation selection hard switch group 35 is a switch to select an operation for the selected device, and includes operation selection hard switches 351 to 354. The operation command hard switch 37 is a switch to command the selected device to perform the operation selected by pressing the operation selection hard switches 351 to 354. The operation selection hard switch group 35 is disposed along the lower side of the liquid crystal display panel 31. The screen management hard switch group 32, the numeric keypad 33A, the enter key 34A, and the operation/monitoring mode switching hard switch 36 are disposed on the right side of the liquid crystal display panel 31.

The display device 3 has a configuration consisting of only the discrete component such as the liquid crystal display panel 31 and the hard switch 38, in which the CPU and the embedded software are not used. Therefore, the display device 3 does not need a precise verification required for the software of the safety system.

In the liquid crystal display panel 31, the monitor screen 310 is displayed. The monitor screen 310 includes a system pane 311 which indicates the devices and instrumentation pipes for each system of the plant. The human-machine interface device 5 displays the operation states of the device in the system pane 311 by differentiating colors and symbol shapes. With this configuration, the operator can identify the operation state of each device by differentiating colors and symbol shapes of the device displayed in the system pane 311. Further, the human-machine interface device 5 displays a process value measured with respect to a device/instrument monitoring a parameter in the system pane 311. With this configuration, the operator can monitor the parameter related to the device/instrument by using the process value of the device displayed in the system pane 311.

A way of screen switching is described using FIG. 2. The screen management hard switch group 32 consists of switches for the use of screen management such as "Screen Test", "Display ON/OFF", "Page Forward", and "Page Backward". In addition, according to the screen configuration of the system, the screen management hard switch group 32 includes a select switch to display arbitrary information necessary for the operator such as a device list and the parameter of the process value. When any one switch in the screen management hard switch group 32 is pressed, a signal from the pressed switch is input to the logic controller 1 through the digital input substrate 12. The selected arbitrary screen information is displayed in the liquid crystal display panel 31 of the display device 3.

FIG. 3 is a diagram illustrating the display device 3 of the first embodiment and the operation screen 313a before selecting a device. In FIG. 3, the operation screen 313a before selecting a device is displayed on the liquid crystal display panel 31. In the operation screen 313a, the system pane 311 and an operation terminal list pane 312a are displayed.

The system pane 311 is similar to the system pane 311 illustrated in FIG. 2, in which two digits of device number are further displayed with respect to an operable device. The operation terminal list pane 312a is still blank, and any device is not yet selected.

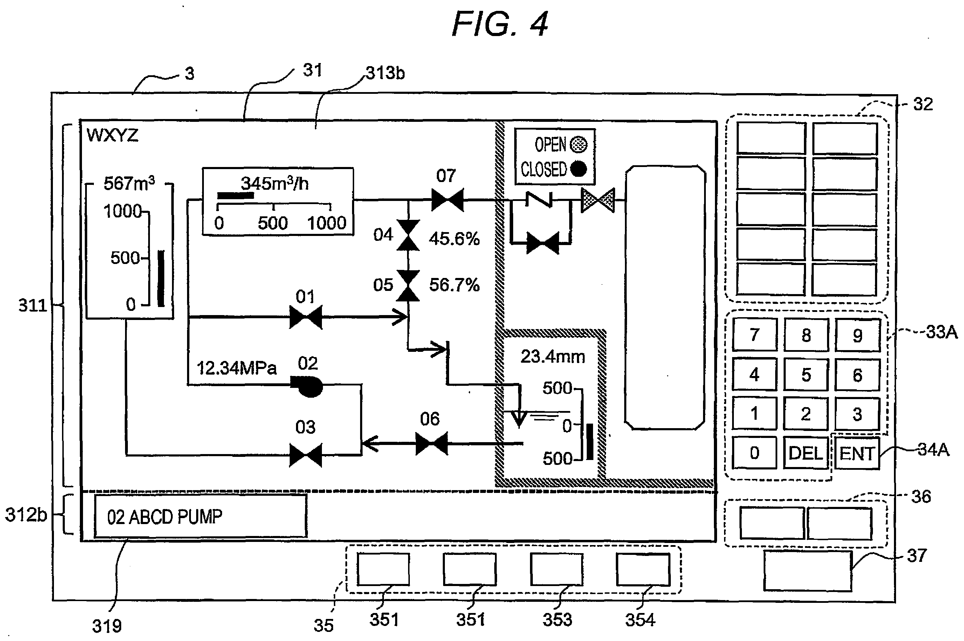

FIG. 4 is a diagram illustrating the display device 3 of the first embodiment and an operation screen 313b after selecting a device displayed therein. In FIG. 4, the operation screen 313b after selecting a device is displayed on the liquid crystal display panel 31. The system pane 311 and an operation terminal list pane 312b are displayed in the operation screen 313b. Herein, the expression "after selecting a device" indicates that the operator operates the numeric keypad 33A to input the number of the device.

The system pane 311 is similar to the system pane 311 illustrated in FIG. 3. The operation terminal list pane 312b of FIG. 4 illustrates a select box 319 with respect to the selected operation target device, in which a device number and a device name of the target device are indicated. With this configuration, the human-machine interface device 5 shows the operator that the device displayed in the select box 319 is selected.

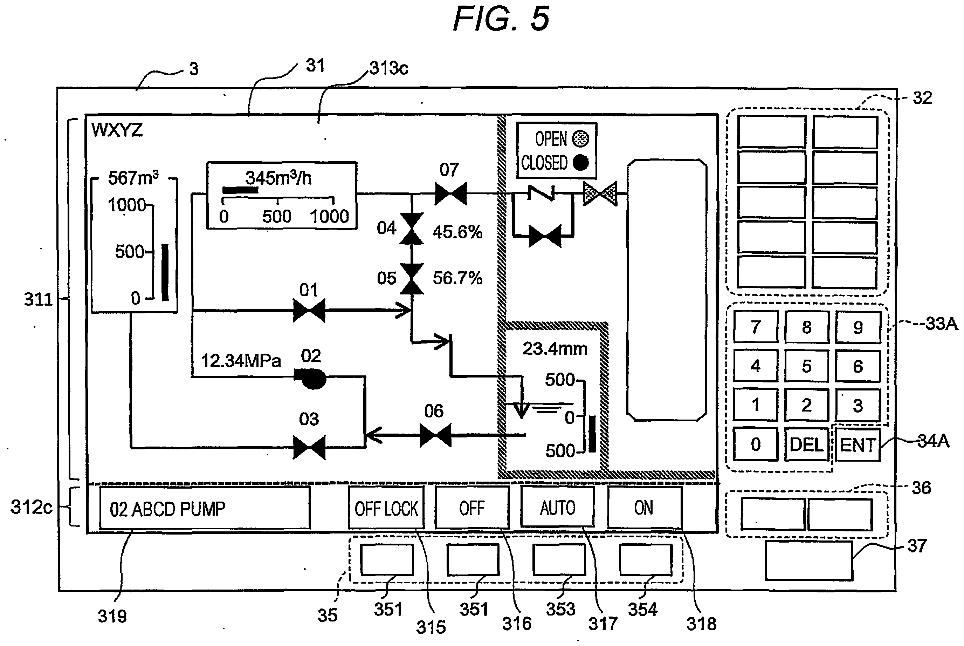

FIG. 5 is a diagram illustrating the display device 3 of the first embodiment and an operation screen 313c after determining a device displayed therein. In FIG. 5, the operation screen 313c after determining a device is displayed on the liquid crystal display panel 31. In the operation screen 313c, the system pane 311 and an operation terminal list pane 312c are displayed. Herein, the expression "after determining a device" indicates that the operator has pressed the enter key 34A to determine a device.

The system pane 311 is similar to the system pane 311 illustrated in FIG. 3. In addition to the select box 319, the operation terminal list pane 312c of FIG. 5 displays select boxes 315 to 318 indicating "Holding Off", "Off", "Auto", and "On" which are operation directions of the device. The select boxes 315 to 318 are displayed respectively adjacent to the operation selection hard switches 351 to 354. With the displaying of the select boxes 315 to 318, the human-machine interface device 5 shows the operator that the operation direction can be input.

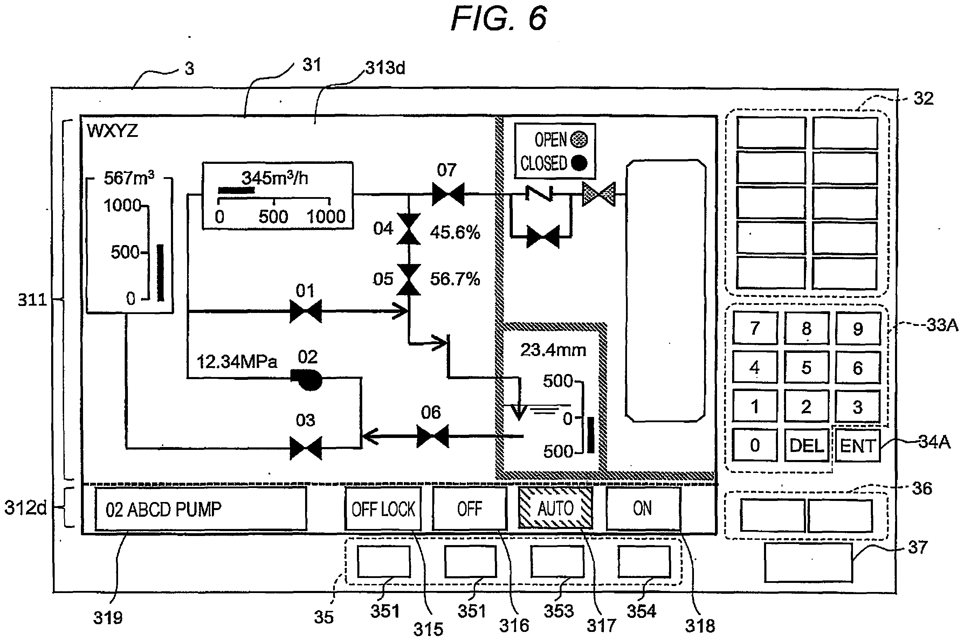

FIG. 6 is a diagram illustrating the display device 3 of the first embodiment and an operation screen 313d after selecting an operation direction displayed therein. In FIG. 6, the operation screen 313d after selecting an operation direction is displayed on the liquid crystal display panel 31. In the operation screen 313d, the system pane 311 and an operation terminal list pane 312d are displayed. Herein, the expression "after selecting an operation direction" indicates that the operator has pressed any one of the operation selection hard switches 351 to 354 to input the operation direction. FIG. 6 illustrates that the operation selection hard switch 353 has been pressed.

The system pane 311 is similar to the system pane 311 illustrated in FIG. 3. The operation terminal list pane 312d of FIG. 6 displays the select box 319 and the select boxes 315 to 318. The select box 317 is emphasized more than the other select boxes 315, 316, and 318 by changing frame color to be displayed. With this configuration, the human-machine interface device 5 shows the operator that a command of "Auto" displayed in the select box 317 is selected.

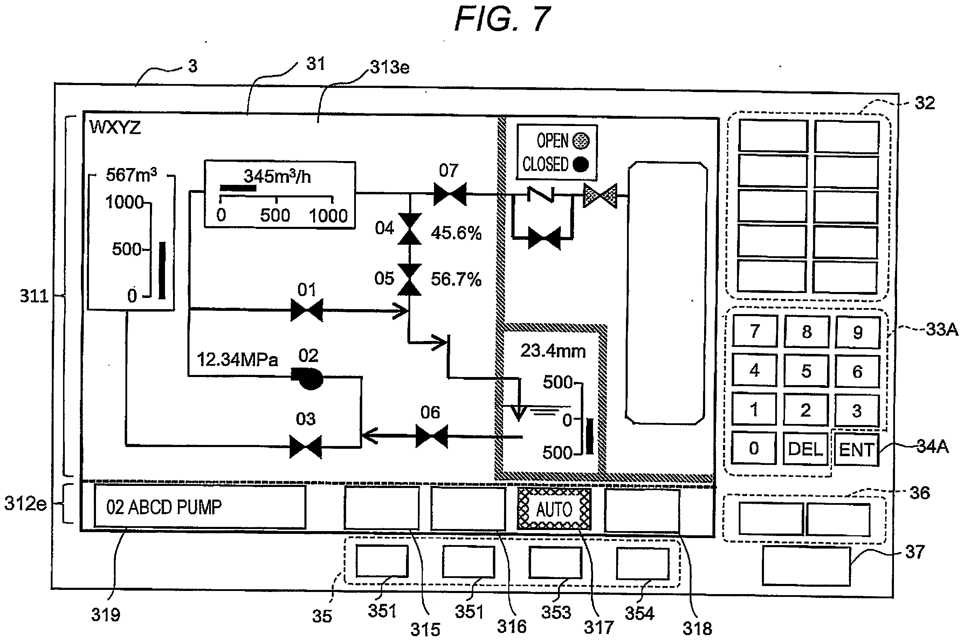

FIG. 7 is a diagram illustrating the display device 3 of the first embodiment and an operation screen 313e after determining an operation direction displayed therein. In FIG. 7, the operation screen 313e after selecting an operation direction is displayed on the liquid crystal display panel 31. In the operation screen 313e, the system pane 311 and an operation terminal list pane 312e are displayed. Herein, the expression "after determining an operation direction" indicates that the operator has pressed the operation command hard switch 37.

The system pane 311 is similar to the system pane 311 illustrated in FIG. 3. The operation terminal list pane 312e of FIG. 7 displays the select box 319 and the select boxes 315 to 318. The select boxes 315, 316, and 318 are illustrated blank in the inside. The select box 317 is further emphasized more than the other select boxes 315, 316, and 318 by being reversely displayed. With this configuration, the human-machine interface device 5 shows the operator that a command of "Auto" displayed in the select box 317 is determined and not related to the other select boxes 315, 316, and 318. Hereinafter, if the operation screens 313a to 313e are not otherwise specified, it will be simply described as the operation screen 313.

FIG. 8 is a flowchart illustrating an operation method of the human-machine interface device 5. In FIG. 8, a case where the device selection and operation are performed using the numeric keypad 33A is described as an example.

The operator moves on to the process to step S12 if the display device 3 displays the operation screen 313 (step S10: Yes). The operator presses the operation/monitoring mode switching hard switch 36 if the display device 3 displays other than the operation screen 313 (step S10: No) (step S11). With this configuration, the display device 3 switches the displaying to the operation screen 313.

Herein, the device selection and operation are possible while displaying the operation screen 313, but the display device 3 is not possible to perform the device selection and operation while the display device 3 displays other than the operation screen 313. Further, the display device 3 normally displays the monitor screen 310, and the display is switched to the monitor screen 310 if a predetermined time elapses in the operation screen 313. With this configuration, it is possible to prevent unintended device selection and operation . When the display device 3 displays the operation screen 313, the serial number is displayed near a device symbol with respect to an operable device among the devices displayed in the system pane 311. Herein, the displayed serial number is a set of numbers of 2 or more digits which is unique to each screen.

In a state where the serial number is displayed in the system pane 311, the operator inputs numbers corresponding to the serial number of an operating target device through the numeric keypad 33A (step S12) to select the device. The input numbers and the name of the selected device are displayed in the select box 319 of an operation terminal list pane 312. Further, the operator may press the delete key inscribed with "DEL" to correct the input numbers. Thereafter, the operator presses the enter key 34A to determine the selected device (step S13).

Through the above operation of selecting a device, the operation terminal list pane 312 displaying information of the selected device is displayed in the lower side of the liquid crystal display panel 31 (step S14). In the operation terminal list pane 312, the select boxes 315 to 319 displaying the operation directions are displayed in a form corresponding to each switch of the operation selection hard switch group 35. The operator determines whether the device selection is correct on the basis of the displaying of the operation terminal list pane 312 (step S15). If the device selection is incorrect (step S15: No), the operator returns the process to step S12 and performs the device selection again.

If the device selection is correct (step S15: Yes), the operator presses a switch mounted below the select box indicating a target operation direction among the operation selection hard switches 351 to 354 (step S16). With this configuration, the operation terminal list pane 312 changes a frame color of the select box of the selected operation direction. The operator is able to identify the operation direction on the liquid crystal display panel 31. Further, a switch selected (pressed) in the operation selection hard switch group 35 may light, so that the operator is able to identify the selected operation direction. In other words, the operator is able to identify the selected operation direction according to the frame color of the select box of the operation terminal list pane 312 or the lightening state of the operation selection hard switch group 35.

Next, the operator determines whether the selection of the operation direction is correct (step S17). If the selection of the operation direction is incorrect (step S17: No), the operator returns the process to step S16. If the selection of the operation direction is correct (step S17: Yes), the operator presses the operation command hard switch 37 (step S18). With this configuration, the human-machine interface device 5 transmits an operation command to the host system controller 4. With this configuration, the select box of the selected operation direction is reversely displayed in the operation terminal list pane 312. The operator is able to identify the determined operation direction on the liquid crystal display panel 31. When the process of step S18 is ended, the process of FIG. 8 is ended.

In the human-machine interface device 5 of the first embodiment, the operator needs a double action for the operation. With this configuration, it is possible to avoid an erroneous operation caused by operator's unintended contact with the hard switch 38. Specifically speaking, a double action is needed to select an operation target device, including the selection operation of the device and the determination operation of the selected device. Further, when an operation target device is selected, the device is displayed in the display device 3 in an identifiable manner. With this configuration, it is possible to determine a device after confirming the selected device.

Similarly, a double action is needed to command the operation direction, including the selection operation of the operation direction and the determination operation of the selected operation direction. Further, when the operation direction is selected, the operation direction is displayed in the display device 3 in an identifiable manner. With this configuration, the operator is able to command an operation direction after confirming the selected operation direction. With such a method, it is possible to suppress an erroneous operation of the operator.

FIG. 9 is a diagram illustrating a mode transition of the human-machine interface device 5. The human-machine interface device 5 is operated in a monitoring mode M10 after being activated, and transitions to an operation mode M20 when the operation/monitoring mode switching hard switch 36 is pressed. The human-machine interface device 5 is switched to the monitoring mode M10 if a predetermined time elapses in the operation mode M20. With this configuration, it is possible to prevent the unintended device selection and operation. At this time, the monitor screen 310 illustrated in FIG. 2 is displayed in the display device 3 for example.

The human-machine interface device 5 displays the unselected state of the device in the operation terminal list pane 312 when transitioning to the operation mode M20. At this time, the operation screen 313a illustrated in FIG. 3 is displayed in the display device 3 for example. In an operation mode M21, the human-machine interface device 5 transitions to an operation mode M22 by the operation of the numeric keypad 33A.

In the operation mode M22, the human-machine interface device 5 displays the device in selection in the operation terminal list pane 312. At this time, the operation screen 313b illustrated in FIG. 4 is displayed in the display device 3 for example. Further, the human-machine interface device 5 transitions to an operation mode M23 when the enter key 34A is pressed.

In the operation mode M23, the human-machine interface device 5 displays the completion of selecting a device in the operation terminal list pane 312. At this time, the operation screen 313c illustrated in FIG. 5 is displayed in the display device 3 for example. Further, the human-machine interface device 5 transitions to an operation mode M24 when a switch corresponding to the operation direction in the operation selection hard switch group 35 is pressed.

In the operation mode M24, the human-machine interface device 5 displays the operation direction in selection in the operation terminal list pane 312. At this time, the operation screen 313d illustrated in FIG. 6 is displayed in the display device 3 for example. Further, the human-machine interface device 5 transitions to an operation mode M25 when the operation command hard switch 37 is pressed.

In the operation mode M25, the human-machine interface device 5 displays the completion of selecting an operation direction in the operation terminal list pane 312. At this time, the operation screen 313e illustrated in FIG. 7 is displayed in the display device 3 for example. Further, the human-machine interface device 5 transmits the operation command to the host system controller 4 (an operation mode M26) to return to the operation mode M23, and continues to select the operation direction.

The human-machine interface device 5 of the first embodiment displays the modes in the display device 3 in an identifiable manner such as before selecting an element, after selecting an element, and after determining a selected element. With this configuration, it is possible to easily confirm a state of the double action, and an erroneous operation can be suppressed.

### <<Second Embodiment>>

Next, the description is given using FIGS. 10 to 16 about a second embodiment in which the device is selected using cursor keys 33U, 33D, 33L, and 33R. FIG. 10 is a diagram illustrating the display device 3 of the second embodiment and an operation screen 314a before selecting a device. In FIG. 10, the cursor keys 33U, 33D, 33L, and 33R corresponding to the device selection hard switch group 33 are each configured by hard switches, and used in the device selection by a pointer 39. The cursor key 33U represents an up direction, and the cursor key 33D represents a down direction. The cursor key 33L represents a left direction, and the cursor key 33R represents a right direction. The cursor keys 33U, 33D, 33L, and 33R are disposed in an approximate cross shape, and a determination key 34B corresponding to the device determination hard switch 34 is disposed in the center. The configurations other than the cursor keys 33U, 33D, 33L, and 33R and the determination key 34B are similar to those of the first embodiment illustrated in FIGS. 2 to 7.

In FIG. 10, the operation screen 314a before selecting a device is displayed on the liquid crystal display panel 31. In the operation screen 314a, the system pane 311 and the operation terminal list pane 312a are displayed.

In the system pane 311, similarly to the system pane 311 illustrated in FIG. 2, a pointer selecting box 391 is displayed near the device symbol with respect to an operable device. The operation terminal list pane 312a is still white, and any device is not yet selected.

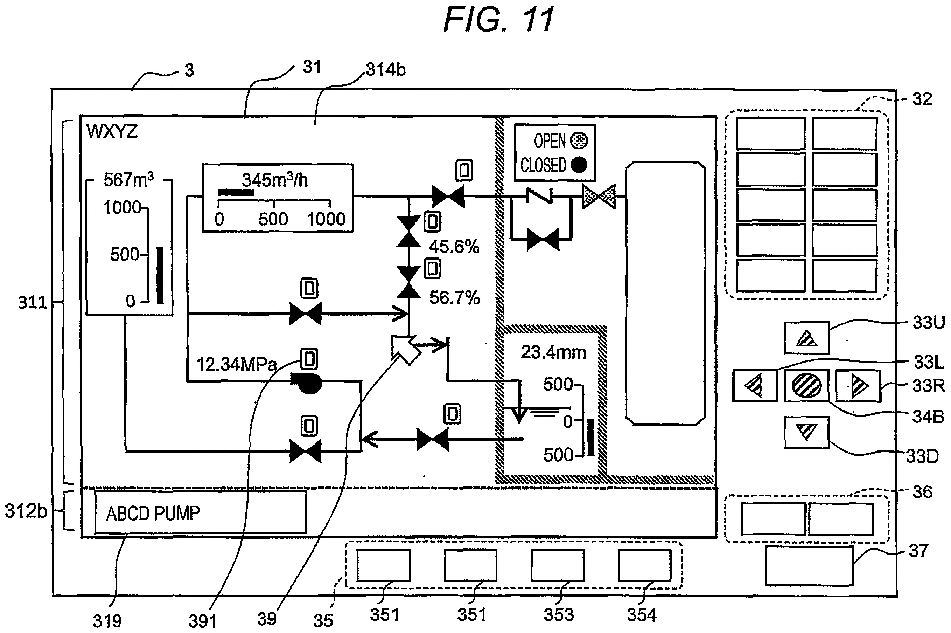

FIG. 11 is a diagram illustrating the display device 3 of the second embodiment and an operation screen 314b after selecting a device displayed therein. In FIG. 11, the operation screen 314b after selecting a device is displayed on the liquid crystal display panel 31. In the operation screen 314b, the system pane 311 and the operation terminal list pane 312b are displayed. Herein, the expression "after selecting a device" indicates that the operator has operated the cursor key to point the pointer selecting box 391 by the pointer 39.

The system pane 311 is similar to the system pane 311 illustrated in FIG. 3. The operation terminal list pane 312b of FIG. 11 illustrates a select box 319 with respect to the selected operation target device, in which a device number and a device name of the target device are described. With this configuration, the human-machine interface device 5 shows the operator that the device displayed in the select box 319 is selected.

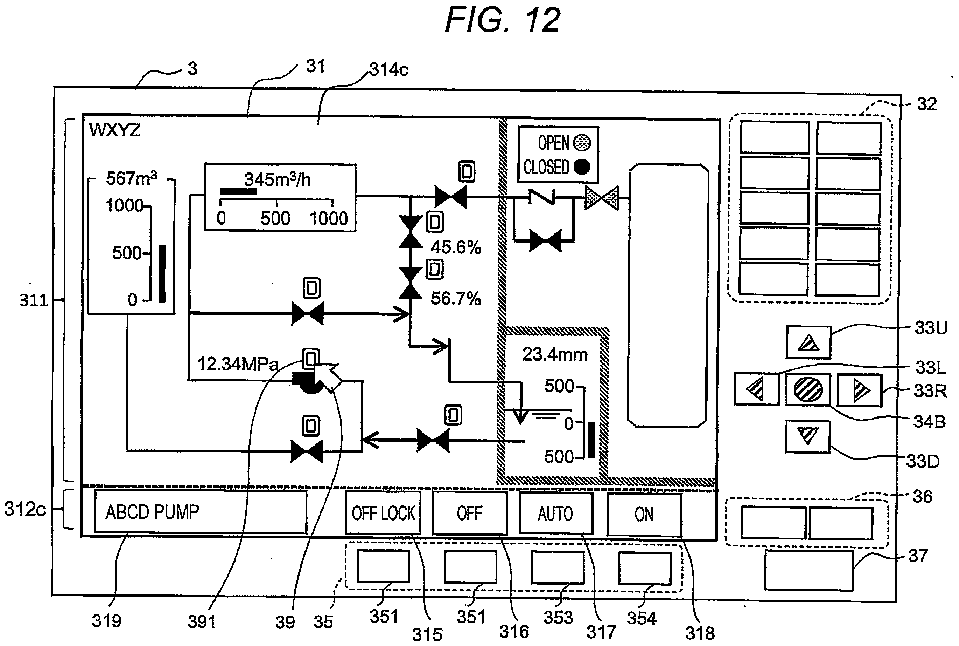

FIG. 12 is a diagram illustrating the display device 3 of the second embodiment and an operation screen 314c after determining a device displayed therein. In FIG. 12, the operation screen 314c after determining a device is displayed on the liquid crystal display panel 31. In the operation screen 314c, the system pane 311 and an operation terminal list pane 312c are displayed. Herein, the expression "after determining a device" indicates that the operator has operated the determination key 34B to determine a device.

The system pane 311 is similar to the system pane 311 illustrated in FIG. 3. The operation terminal list pane 312c of FIG. 12 illustrates a device number and a device name of the target device, and the select boxes 315 to 318 indicating the operation directions of a device, such as "Off Lock", "Off", "Auto", and "On" with respect to the selected operation target device. Among them, the select boxes 315 to 318 indicating the operation directions of a device are illustrated adjacently to the operation selection hard switches 351 to 354 corresponding to the select box. With the displaying of the select boxes 315 to 318, the human-machine interface device 5 shows the operator that the operation direction can be input.

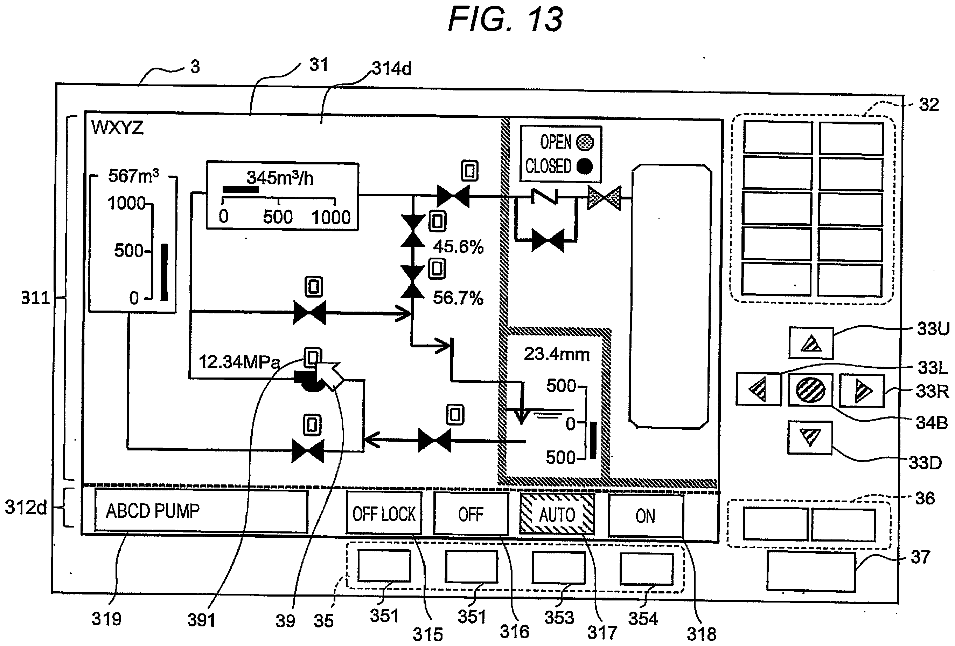

FIG. 13 is a diagram illustrating the display device 3 of the second embodiment and an operation screen 314d after selecting an operation direction displayed therein. In FIG. 13, the operation screen 314d after selecting an operation direction is displayed on the liquid crystal display panel 31. In the operation screen 314d, the system pane 311 and an operation terminal list pane 312d are displayed. Herein, the expression "after selecting an operation direction" indicates that the operator has pressed any one of the operation selection hard switches 351 to 354 to input the operation direction. FIG. 13 illustrates that the operation selection hard switch 353 has been pressed.

The system pane 311 is similar to the system pane 311 illustrated in FIG. 3. The operation terminal list pane 312d of FIG. 13 displays the select box 319 and the select boxes 315 to 318. The select box 317 is emphasized more than the other select boxes 315, 316, and 318 by changing frame color to be displayed. With this configuration, the human-machine interface device 5 shows the operator that a command of "Auto" displayed in the select box 317 is selected.

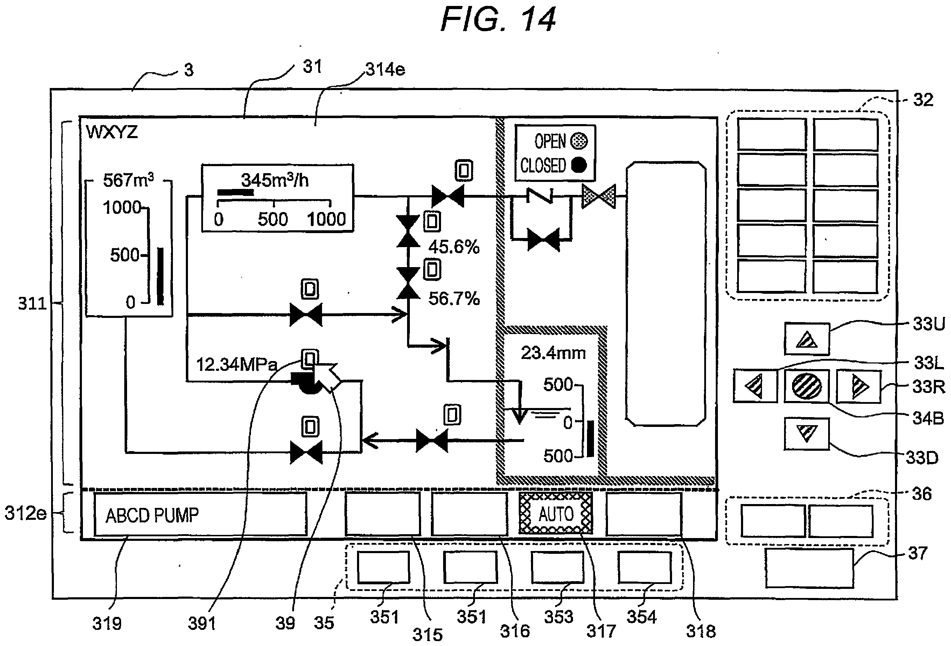

FIG. 14 is a diagram illustrating the display device 3 of the second embodiment and an operation screen 314e after determining an operation direction displayed therein. In FIG. 14, the operation screen 314e after selecting an operation direction is displayed on the liquid crystal display panel 31. In the operation screen 314e, the system pane 311 and an operation terminal list pane 312e are displayed. Herein, the expression "after determining an operation direction" indicates that the operator has pressed the operation command hard switch 37.

The system pane 311 is similar to the system pane 311 illustrated in FIG. 3. The operation terminal list pane 312e of FIG. 14 displays the select box 319 and the select boxes 315 to 318. The select boxes 315, 316, and 318 are illustrated with white in the inside. The select box 317 is further emphasized more than the other select boxes 315, 316, and 318 by being reversely displayed. With this configuration, the human-machine interface device 5 shows the operator that a command of "Auto" displayed in the select box 317 is determined and not related to the other select boxes 315, 316, and 318. Hereinafter, if the operation screens 314a to 314e are not otherwise specified, it will be simply described as the operation screen 314.

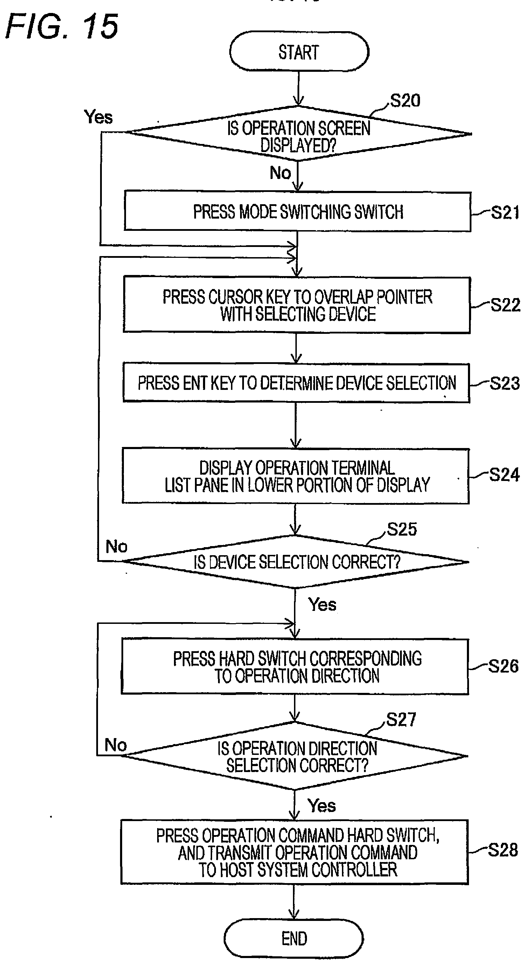

FIG. 15 is a flowchart illustrating an operation method of the human-machine interface device 5. In FIG. 15, a case where the device selection and operation are performed using the cursor keys 33U, 33D, 33L, and 33R are described as an example.

The operator progresses the process to step S22 if the display device 3 displays the operation screen 314 (step S20: Yes). The operator presses the operation/monitoring mode switching hard switch 36 if the display device 3 displays other than the operation screen 314 (step S20: No) (step S21). With this configuration, the display device 3 switches the displaying to the operation screen 314.

Herein, the device selection and operation are possible while displaying the operation screen 314, but the display device 3 is not possible to perform the device selection and operation while the display device 3 displays other than the operation screen 314. Further, the display device 3 normally displays the monitor screen 310, and the display is switched to the monitor screen 310 if a predetermined time elapses in the operation screen 314. With this configuration, it is possible to prevent the unintended device selection and operation. When the display device 3 displays the operation screen 314, the pointer selecting box 391 is displayed near the device symbol with respect to an operable device among the devices displayed in the system pane 311.

In a state where the pointer selecting box 391 is displayed in the system pane 311, the operator overlaps the pointer 39 with the pointer selecting box 391 of an operating target device (step S22) to select the device. The name of the selected device is displayed in the select box 319 of an operation terminal list pane 312. Thereafter, the operator presses the determination key 34B to determine the selected device (step S23).

Through the above operation of selecting a device, the operation terminal list pane 312 displaying information of the selected device is displayed in the lower side of the liquid crystal display panel 31 (step S24). In the operation terminal list pane 312, the select boxes 315 to 319 displaying the operation directions are displayed in a form corresponding to each switch of the operation selection hard switch group 35. The operator determines whether the device selection is correct on the basis of the displaying of the operation terminal list pane 312 (step S25). If the device selection is incorrect (step S25: No), the operator returns the process to step S22 and performs the device selection again.

If the device selection is correct (step S25: Yes), the operator presses a switch mounted below the select box indicating a target operation direction among the operation selection hard switches 351 to 354 (step S26). With this configuration, the operation terminal list pane 312 changes a frame color of the select box of the selected operation direction. The operator is able to identify the operation direction on the liquid crystal display panel 31. Further, a switch selected (pressed) in the operation selection hard switch group 35 may light, so that the operator is able to identify the selected operation direction. In other words, the operator is able to identify the selected operation direction according to the frame color of the select box of the operation terminal list pane 312 or the lightening state of the operation selection hard switch group 35.

Next, the operator determines whether the selection of the operation direction is correct (step S27). If the selection of the operation direction is incorrect (step S27: No), the operator returns the process to step S26. If the selection of the operation direction is correct (step S27: Yes), the operator presses the operation command hard switch 37 (step S28). With this configuration, the human-machine interface device 5 transmits an operation command to the host system controller 4. With this configuration, the select box of the selected operation direction is reversely displayed in the operation terminal list pane 312. The operator is able to identify the determined operation direction on the liquid crystal display panel 31. When the process of step S28 is ended, the process of FIG. 15 is ended.

Even in the human-machine interface device 5 of the second embodiment, the operator needs a double action for the operation. With this configuration, it is possible to avoid an erroneous operation caused by operator's unintended contact with the hard switch 38.

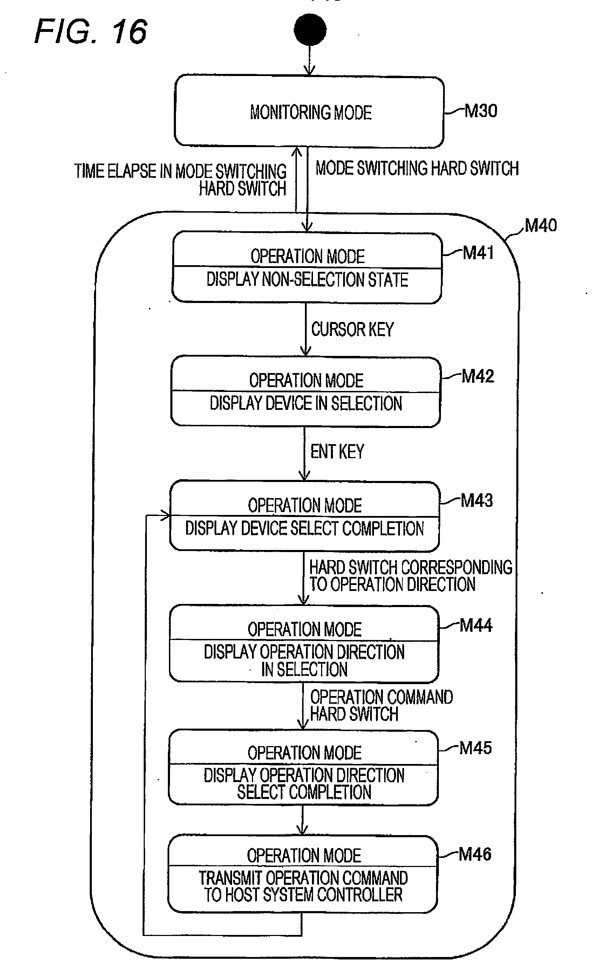

FIG. 16 is a diagram illustrating a mode transition of the human-machine interface device 5. The human-machine interface device 5 operates in a monitoring mode M30 after being activated, and transitions to an operation mode M40 when the operation/monitoring mode switching hard switch 36 is pressed. The human-machine interface device 5 is switched to the monitoring mode M30 if a predetermined time elapses in the operation mode M40. With this configuration, it is possible to prevent the unintended device selection and device operation. At this time, a screen similar to the monitor screen 310 illustrated in FIG. 2 is displayed in the display device 3 for example.

The human-machine interface device 5 displays the unselected state of the device in the operation terminal list pane 312 when transitioning to the operation mode M40. At this time, the operation screen 314a illustrated in FIG. 10 is displayed in the display device 3 for example. In the operation mode M21, the human-machine interface device 5 transitions to an operation mode M42 by selecting a device using the cursor keys 33U, 33D, 33L, and 33R to operate the pointer 39.

In the operation mode M42, the human-machine interface device 5 displays the device in selection in the operation terminal list pane 312. At this time, the operation screen 314b illustrated in FIG. 11 is displayed in the display device 3 for example. Further, the human-machine interface device 5 transitions to an operation mode M43 by pressing the determination key 34B.

In the operation mode M43, the human-machine interface device 5 displays the completion of selecting a device in the operation terminal list pane 312. At this time, the operation screen 314c illustrated in FIG. 12 is displayed in the display device 3 for example. Further, the human-machine interface device 5 transitions to an operation mode M44 when a switch corresponding to the operation direction in the operation selection hard switch group 35 is pressed.

In the operation mode M44, the human-machine interface device 5 displays the operation direction in selection in the operation terminal list pane 312. At this time, the operation screen 314d illustrated in FIG. 13 is displayed in the display device 3 for example. Further, the human-machine interface device 5 transitions to an operation mode M45 if the operation command hard switch 37 is pressed.

In the operation mode M45, the human-machine interface device 5 displays the completion of selecting an operation direction in the operation terminal list pane 312. At this time, the operation screen 314e illustrated in FIG. 14 is displayed in the display device 3 for example. Further, the human-machine interface device 5 transmits the operation command to the host system controller 4 (an operation mode M46) to return to the operation mode M43, and continues to select the operation direction.

The human-machine interface device 5 of the second embodiment displays the modes in the display device 3 in an identifiable manner such as before selecting an element, after selecting an element, and after determining a selected element. With this configuration, it is possible to easily confirm a state of the double action, and an erroneous operation can be suppressed.

In this way, it is possible to select a device without causing an erroneous operation similarly to the numeric keypad 33A even using the cursor keys 33U, 33D, 33L, and 33R which are disposed in an approximate cross shape.

### (Modifications)

The invention is not limited to the above embodiments, and various modifications can be made. For example, the embodiments are described in a clearly understandable way for the invention, and thus the invention is not necessarily to provide all the configurations described above. Some configurations of a certain embodiment may be replaced with the configurations of another embodiment, and the configuration of the other embodiment may also be added to the configuration of a certain embodiment. Further, additions, omissions, and substitutions may be made on some configurations of each embodiment using other configurations.

Some or all of the configurations, functions, processing units, and processing means may be realized by hardware such as an integrated circuit. The configurations and functions may be realized by software such that a program for realizing the functions is analyzed and executed by a processor. Information such as the programs, tables, and files for realizing the functions may be stored in a recording device such as a memory, a hard disk, an SSD (Solid State Drive), or a recording medium such as a flash memory card and a DVD (Digital Versatile Disk).

In addition, controls lines and information lines in the embodiments are illustrated for the sake of explanation, and it does not mean that all the control lines and information lines necessary for manufacturing a product are illustrated. In practice, it may be considered that almost all of the configurations are connected to one another.

The invention is not limited to the above embodiments, but may be modified within the scope defined by the claims. For example, the following (a) to (c) may be implemented.
(a) An ON/OFF hard switch such as a key may be provided instead of the operation command hard switch 37. With this configuration, when a final device operation is performed, the operator inserts the key into a key hole in a state where the operation direction is selected to rotate the key in the operation command direction, and thus transmits the operation command to the logic controller 1. The operation command to the device can only be made by the key. Therefore, the key may be distributed only to a person who has an operation authority on the device, so that it is possible to prevent a careless operation command from being made by a person who has no operation authority on the device.
(b) The manufacturing of the logic unit substrate 11 is not limited to the manufacturing by the FPGA, but may be manufactured in an arbitrary hardware form such as an ASIC (application specific integrated circuit) and a PLD (programmable logic device).
(c) The operation mode of the human-machine interface device 5 is not limited to the monitoring mode and the operation mode, and may be any other mode.

### Reference Signs List

- 1: logic controller
- 11: logic unit substrate
- 12: digital input substrate
- 13: digital output substrate
- 14, 15: interface substrate
- 2: display controller
- 21, 23: interface substrate
- 22: drawing engine
- 3: display device
- 31: liquid crystal display panel
- 32: screen management hard switch group
- 33: device selection hard switch group
- 35: operation selection hard switch group
- 36: operation/monitoring mode switching hard switch
- 37: operation command hard switch
- 311: system pane
- 313a to 313c, 314a to 314c: operation terminal list pane
- 313: numeric keypad
- 321: cursor key
- 4: system controller
- 5: human-machine interface device

## Claims

1. A human-machine interface device, comprising:
a logic controller (1) configured to be applied to a safety system of a nuclear power plant; and
a display device (3) including a display unit (31) and a hard switch (38),
wherein the logic controller (1) includes
an interface (14) for an instrumentation control system of the nuclear power plant,
a logic unit (11) configured by a hardware logic to control switching of display information of the display device (3) by the hard switch (38), and
a display controller (2) configured to convert the display information from the logic unit (11) into pixels to output the display information to the display device (3) **characterized in that**
the hard switch (38) further includes:
a device selection hard switch group (33) for selecting each device of the instrumentation control system of the nuclear power plant,
a device determination hard switch (34) configured to determine a device selected by the device selection hard switch group (33),
an operation selection hard switch group (35) configured to select an operation of a device determined by the device determination hard switch (34), and
an operation command hard switch (37) configured to determine an operation of a device selected by the operation selection hard switch group (35).

2. The human-machine interface device according to claim 1,
wherein the device selection hard switch group (33) includes a numeric keypad configured to receive a number of a device displayed in the display unit (31) to select the device.

3. The human-machine interface device according to claim 1,
wherein the device selection hard switch group (33) is configured to include a cursor key which overlaps a pointer (39) displayed in the display unit (31) with a region related to a device displayed in the display unit (31).

4. The human-machine interface device according to claim 1,
wherein the operation selection hard switch group (35) is provided along any side of the display unit (31), and
wherein the logic unit (11) is configured to display operation information for a device determined by the device determination hard switch (34) in the side of the display unit (31) along the operation selection hard switch group (35) in the display controller (22) to correspond to the operation selection hard switch group (35).

5. The human-machine interface device according to claim 4,
wherein, when any hard switch in the operation selection hard switch group (35) is pressed, the logic unit (11) displays selecting of operation information corresponding to the pressed hard switch in the subject hard switch.

## Patentansprüche

1. Mensch/Maschine-Schnittstellenvorrichtung, die Folgendes umfasst:
eine Logiksteuerung (1), die konfiguriert ist, auf ein Sicherheitssystem eines Kernkraftwerks angewendet zu werden; und
eine Anzeigevorrichtung (3), die eine Anzeigeeinheit (31) und einen harten Schalter (38) enthält,
wobei die Logiksteuerung (1) Folgendes enthält:
eine Schnittstelle (14) für ein Instrumentierungssteuerungssystem des Kernkraftwerks,
eine Logikeinheit (11), die durch eine Hardware-Logik konfiguriert ist, um das Schalten der Anzeigeinformationen der Anzeigevorrichtung (3) durch den harten Schalter (38) zu steuern, und
eine Anzeigesteuerungseinrichtung (2), die konfiguriert ist, die Anzeigeinformationen von der Logikeinheit (11) in Pixel umzuwandeln, um die Anzeigeinformationen an die Anzeigevorrichtung (3) auszugeben, **dadurch gekennzeichnet, dass**
der harte Schalter (38) ferner Folgendes umfasst:
eine Vorrichtungsauswahl-Hartschaltergruppe (33) zum Auswählen jeder Vorrichtung des Instrumentierungssteuerungssystems des Kernkraftwerks,
einen Vorrichtungsbestimmungshartschalter (34), der konfiguriert ist, eine Vorrichtung zu bestimmen, die von der Vorrichtungsauswahl-Hartschaltergruppe (33) ausgewählt worden ist,
eine Betriebsauswahl-Hartschaltergruppe (35), die konfiguriert ist, einen Betrieb einer Vorrichtung auszuwählen, die von dem Vorrichtungsbestimmungshartschalter (34) bestimmt worden ist, und
einen Betriebsbefehlshartschalter (37), der konfiguriert ist, einen Betrieb einer Vorrichtung zu bestimmen, der von der Betriebsauswahl-Hartschaltergruppe (35) ausgewählt worden ist.

2. Mensch/Maschine-Schnittstellenvorrichtung nach Anspruch 1, wobei die Vorrichtungsauswahl-Hartschaltergruppe (33) ein numerisches Tastenfeld enthält, das konfiguriert ist, eine Zahl einer Vorrichtung, die in der Anzeigeeinheit (31) angezeigt wird, zu empfangen, um die Vorrichtung auszuwählen.

3. Mensch/Maschine-Schnittstellenvorrichtung nach Anspruch 1, wobei die Vorrichtungsauswahl-Hartschaltergruppe (33) konfiguriert ist, eine Pfeiltaste zu enthalten, die einen Zeiger (39), der in der Anzeigeeinheit (31) angezeigt wird, mit einem Bereich überlappt, der auf eine Vorrichtung, die in der Anzeigeeinheit (31) angezeigt wird, bezogen ist.

4. Mensch/Maschine-Schnittstellenvorrichtung nach Anspruch 1,
wobei die Betriebsauswahl-Hartschaltergruppe (35) entlang einer beliebigen Seite der Anzeigeeinheit (31) vorgesehen ist, und
wobei die Logikeinheit (11) konfiguriert ist, Betriebsinformationen für eine Vorrichtung, die von dem Vorrichtungsbestimmungshartschalter (34) bestimmt worden ist, an der Seite der Anzeigeeinheit (31) entlang der Betriebsauswahl-Hartschaltergruppe (35) in der Anzeigesteuerungseinrichtung (22) anzuzeigen, um mit der Betriebsauswahl-Hartschaltergruppe (35) übereinzustimmen.

5. Mensch/Maschine-Schnittstellenvorrichtung nach Anspruch 4,
wobei dann, wenn irgendein Hartschalter in der Betriebsauswahl-Hartschaltergruppe (35) gedrückt wird, die Logikeinheit (11) das Auswählen der Betriebsinformationen entsprechend dem gedrückten Hartschalter in dem betreffenden Hartschalter anzeigt.

## Revendications

1. Dispositif interface homme-machine, comprenant :
un contrôleur logique (1) configuré pour être appliqué à un système de sécurité d'une centrale d'énergie nucléaire ; et
un dispositif d'affichage (3) incluant une unité d'affichage (31) et un commutateur matériel (38),
dans lequel le contrôleur logique (1) inclut
une interface (14) pour un système de commande d'instrumentation de la centrale d'énergie nucléaire,
une unité logique (11) configurée par une logique matérielle pour commander une commutation d'information d'affichage du dispositif d'affichage (3) au moyen du commutateur matériel (38), et
un contrôleur d'affichage (2) configuré pour convertir en pixels l'information d'affichage provenant de l'unité logique (11) pour sortir l'information d'affichage vers le dispositif d'affichage (3),
**caractérisé en ce que**
le commutateur matériel (38) inclut en outre :
un groupe de commutateurs matériels de sélection de dispositif (33) destiné à sélectionner chaque dispositif du système de commande d'instrumentation de la centrale d'énergie nucléaire,
un commutateur matériel de détermination de dispositif (34) configuré pour déterminer un dispositif sélectionné par le groupe de commutateurs matériels de sélection de dispositif (33),
un groupe de commutateurs matériels de sélection d'actionnement (35) configuré pour sélectionner un actionnement d'un dispositif déterminé par le commutateur matériel de détermination de dispositif (34), et
un commutateur matériel d'ordre d'actionnement (37) configuré pour déterminer un actionnement d'un dispositif sélectionné par le groupe de commutateurs matériels de sélection d'actionnement (35).

2. Dispositif interface homme-machine selon la revendication 1,
dans lequel le groupe de commutateurs matériels de sélection de dispositif (33) inclut un pavé numérique configuré pour recevoir un numéro d'un dispositif affiché dans l'unité d'affichage (31) pour sélectionner le dispositif.

3. Dispositif interface homme-machine selon la revendication 1,
dans lequel le groupe de commutateurs matériels de sélection de dispositif (33) est configuré pour inclure une touche curseur qui fait superposer un pointeur (39) affiché dans l'unité d'affichage (31) avec une région en relation avec un dispositif affiché dans l'unité d'affichage (31).

4. Dispositif interface homme-machine selon la revendication 1,
dans lequel le groupe de commutateurs matériels de sélection d'actionnement (35) est prévu le long d'un côté quelconque de l'unité d'affichage (31), et
dans lequel l'unité logique (11) est configurée pour afficher une information d'actionnement pour un dispositif déterminé par le commutateur matériel de détermination de dispositif (34) dans le côté de l'unité d'affichage (31) le long du groupe de commutateurs matériels de sélection d'actionnement (35) dans le contrôleur d'affichage (22) pour correspondre au groupe de commutateurs matériels de sélection d'actionnement (35).

5. Dispositif interface homme-machine selon la revendication 4,
dans lequel, quand un commutateur matériel quelconque parmi le groupe de commutateurs matériels de sélection d'actionnement (35) est pressé, l'unité logique (11) affiche une sélection d'information d'actionnement correspondant aux commutateurs matériels pressés dans le commutateur matériel en question.
